# FASCICULE DE BREVET EUROPEEN

(11) **EP 2 320 135 B1**
(45) Date de publication et mention de la délivrance du brevet: **20.04.2016**
(21) Numéro de dépôt: 10188733.9
(22) Date de dépôt: 25.10.2010
(51) Int. Cl.: F21V 19/00, F21S 8/10, F21V 17/00

(54) **Dispositif d'éclairage et/ou de signalisation d'un véhicule automobile assemblé par empilage**
Vorrichtung zur Beleuchtung und/oder Signalisierung eines Kraftfahrzeugs, die als Kontaktsatz zusammengebaut ist
Lighting and/or signalling device for an automobile, assembled by stacking

(30) Priorité: 05.11.2009 FR 0957825
(43) Date de publication de la demande: 11.05.2011
(73) Titulaire: VALEO VISION, 93012 Bobigny (FR)
(72) Inventeur: Herbin, Cyril, 59530, POTELLE (FR); Maliar, Rémi, 59880, SAINT SAULVE (FR)

(56) Documents cités:
- EP-A1- 2 023 036
- DE-U1- 20 122 747

## Description

La présente invention concerne un dispositif d'éclairage et/ou de signalisation d'un véhicule automobile. Elle concerne aussi un véhicule équipé d'un tel dispositif d'éclairage et/ou de signalisation. Elle concerne encore un procédé d'assemblage d'un tel dispositif d'éclairage et/ou de signalisation d'un véhicule automobile.

On connaît des dispositifs d'éclairage ou de signalisation pour véhicule automobile qui comprennent une enceinte formée par un boîtier et une glace et destinée à recevoir un réflecteur et une source lumineuse montée sur un support.

Pour assembler un tel dispositif d'éclairage ou de signalisation, il est courant de positionner et de fixer, notamment par vissage, le support dans le boîtier, puis de positionner et de fixer, notamment par vissage, le réflecteur sur le support ou sur le boîtier. Enfin, on met en place et on fixe la glace sur le boîtier. Les opérations de fixation du support dans le boîtier et de fixation du réflecteur sur le support ou sur le boîtier sont, en particulier lorsqu'il s'agit d'opérations de vissage, génératrices de complexité et donc de coûts.

D'autres exemples montrant des dispositifs semblables sont connus le EP 202 3036 où DE 2012 2747U.

Le but de l'invention est de fournir un dispositif d'éclairage et/ou de signalisation et un procédé d'assemblage permettant de remédier au problème évoqué précédemment et améliorant les dispositifs d'éclairage et/ou de signalisation et les procédés d'assemblage connus de l'art antérieur. En particulier, l'invention propose de réduire la complexité et le coût de production d'un dispositif d'éclairage et/ou de signalisation. Notamment, l'invention propose un dispositif de réglage ayant une structure simple et un procédé de montage simplifié d'un tel dispositif de réglage.

Selon l'invention, le dispositif d'éclairage et/ou de signalisation d'un véhicule automobile, comprend une enceinte formée par un boîtier et une glace et recevant un support supportant au moins une source lumineuse et un réflecteur. Il est caractérisé en ce que le boîtier et la glace présentent respectivement un premier moyen d'appui sur le support ou sur le réflecteur ou sur l'ensemble support-réflecteur et un deuxième moyen d'appui sur le support ou sur le réflecteur ou sur l'ensemble support-réflecteur, les moyens d'appui permettant d'immobiliser le support ou le réflecteur ou l'ensemble support-réflecteur selon au moins une direction, voire d'appliquer une action mécanique, par exemple de flexion, contraignant le support ou le réflecteur ou l'ensemble support-réflecteur. Une telle structure permet de simplifier le procédé d'assemblage du dispositif et, par conséquent, de réduire les coûts d'assemblage.

Le support et/ou le réflecteur peuvent comprendre au moins une extension venant en contact avec un produit adhésif liant la glace et le boîtier. Ainsi, on peut immobiliser le support et/ou le réflecteur selon les autres directions par collage.

Le boîtier peut comprendre un canal destiné à recevoir le produit adhésif et dont au moins certaines portions des bords sont formées par l'au moins une extension. Ces moyens permettent de réaliser le collage de manière économique.

Le boîtier peut comprendre un premier moyen de positionnement coopérant avec un deuxième moyen de positionnement prévu sur le support ou sur le réflecteur. Ainsi, le support ou le réflecteur peuvent être positionnés dans le boîtier.

Alternativement, la glace peut comprendre un troisième moyen de positionnement coopérant avec un quatrième moyen de positionnement prévu sur le support ou sur le réflecteur. Ainsi, le support ou le réflecteur peuvent être positionnés dans la glace.

Le support peut comprendre un cinquième moyen de positionnement coopérant avec un sixième moyen de positionnement prévu sur le réflecteur. Ainsi, le support et le réflecteur peuvent être positionnés précisément l'un par rapport à l'autre.

De préférence, la glace est collée et/ou clippée et/ou soudée sur le boîtier.

Selon l'invention, un véhicule automobile est caractérisé en ce qu'il comprend un dispositif d'éclairage et/ou de signalisation défini précédemment.

Selon l'invention, un procédé d'assemblage d'un dispositif d'éclairage et/ou de signalisation d'un véhicule automobile défini précédemment est caractérisé en ce qu'il comprend les étapes suivantes :
- mettre en place, sur le boîtier :
   - le support, ou
   - le support et le réflecteur,
      en solidarisant ni le support, ni le réflecteur, au boîtier,
- assembler la glace au boîtier, par exemple par collage et/ou par clippage et/ou soudage.

Aucune étape de fixation du support dans le boîtier, notamment aucune étape de fixation par vissage, n'est nécessaire dans ce procédé. Ainsi, son coût de mise en oeuvre est réduit.

Alternativement, selon l'invention, un procédé d'assemblage d'un dispositif d'éclairage et/ou de signalisation d'un véhicule automobile défini précédemment est caractérisé en ce qu'il comprend les étapes suivantes :
- mettre en place, sur la glace :
   - le réflecteur ou
   - le support et le réflecteur,
      en solidarisant ni le support, ni le réflecteur, à la glace,
- assembler la glace au boîtier, par exemple par collage et/ou par clippage et/ou soudage.

Aucune étape de fixation du réflecteur sur la glace, notamment aucune étape de fixation par vissage, n'est nécessaire dans ce procédé. Ainsi, son coût de mise en oeuvre est réduit.

De préférence, l'étape d'assemblage de la glace au boîtier provoque une déformation, par exemple en flexion, du support et/ou du réflecteur. Grâce à cette action et au frottement au niveau des points d'application de cette action, les mouvements du support et/ou du réflecteur sont interdits.

Le dessin annexé représente, à titre d'exemples, trois modes de réalisation d'un dispositif d'éclairage et/ou de signalisation pour véhicule automobile selon l'invention et un mode d'exécution d'un procédé d'assemblage selon l'invention.
Les figures 1 à 3 sont des vues éclatées en perspective d'un boîtier d'un premier mode de réalisation d'un dispositif d'éclairage et/ou de signalisation selon l'invention.
Les figures 4 à 6 sont des vues éclatées en perspective d'un ensemble boîtier-plaque support de sources lumineuses, de ce premier mode de réalisation, les figures représentant l'ensemble à différentes étapes du procédé d'assemblage selon l'invention.
Les figures 7 et 8 sont des vues éclatées en perspective d'un ensemble boîtier-plaque support de sources lumineuses-réflecteur, de ce premier mode de réalisation, les figures représentant l'ensemble à différentes étapes du procédé d'assemblage selon l'invention.
Les figures 9, 9A et 9B sont des vue en perspective d'un réflecteur du premier mode de réalisation de dispositif d'éclairage et/ou de signalisation selon l'invention
Les figures 10 et 11 sont des vues éclatées en perspective de ce premier mode de réalisation du dispositif d'éclairage et/ou de signalisation selon l'invention.
La figure 12 est une vue schématique en coupe du premier mode de réalisation du dispositif d'éclairage et/ou de signalisation selon l'invention.
La figure 13 est une vue schématique en coupe d'un deuxième mode de réalisation du dispositif d'éclairage et/ou de signalisation selon l'invention.
La figure 14 est une vue schématique en coupe d'un troisième mode de réalisation du dispositif d'éclairage et/ou de signalisation selon l'invention.
La figure 15 est une vue de face du premier mode de réalisation du dispositif d'éclairage et/ou de signalisation selon l'invention.
Les figures 16, 17, 18, 19 et 20 sont des vues en coupes transversales selon respectivement A-A, B-B, C-C, E-E, F-F sur la figure 15.
La figure 21 est une vue de derrière du premier mode de réalisation du dispositif d'éclairage et/ou de signalisation selon l'invention.
La figure 22 est une vue en coupe transversale selon D-D sur la figure 21.

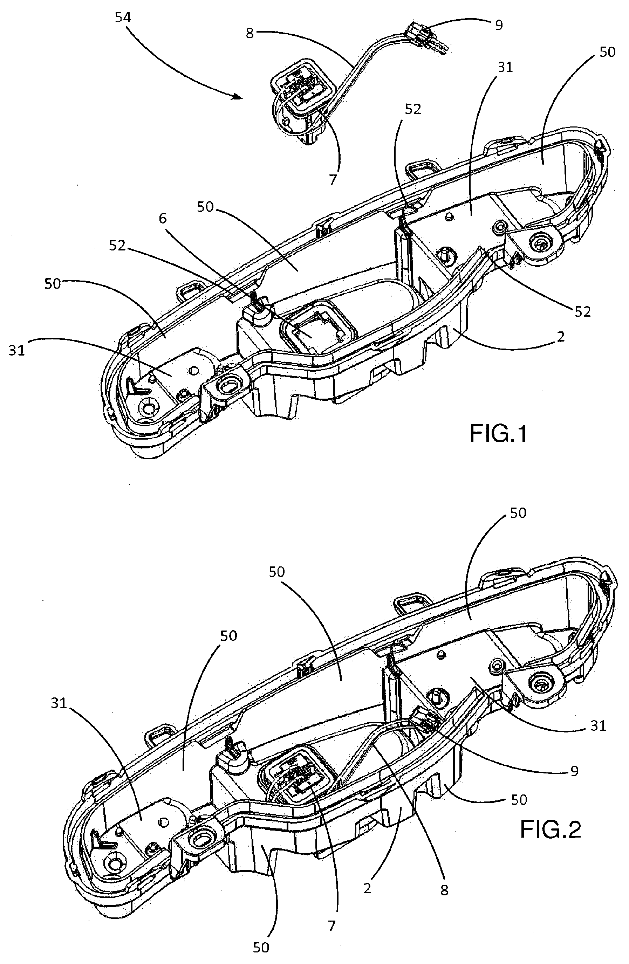

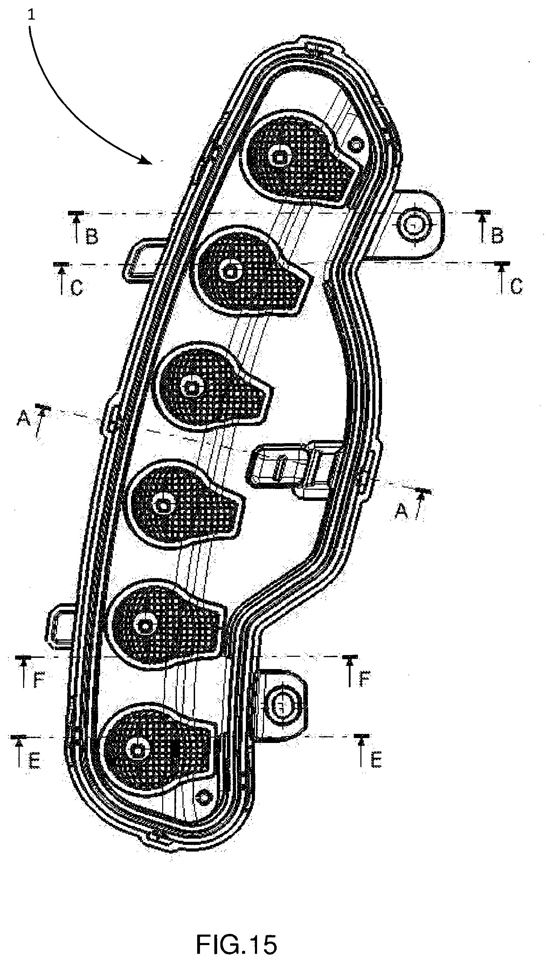

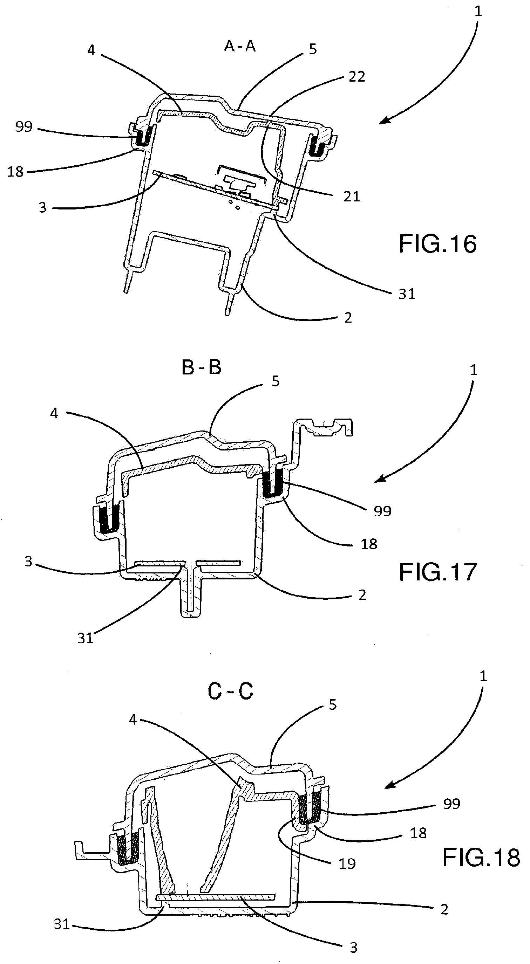

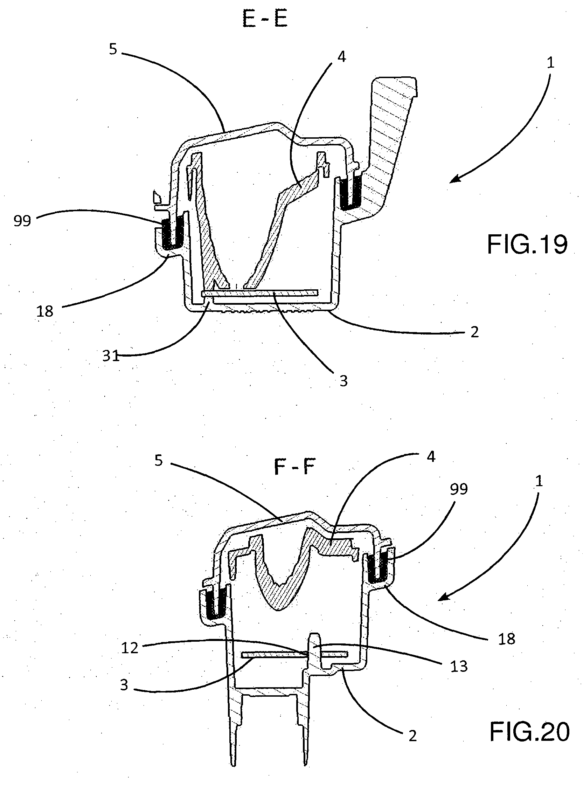

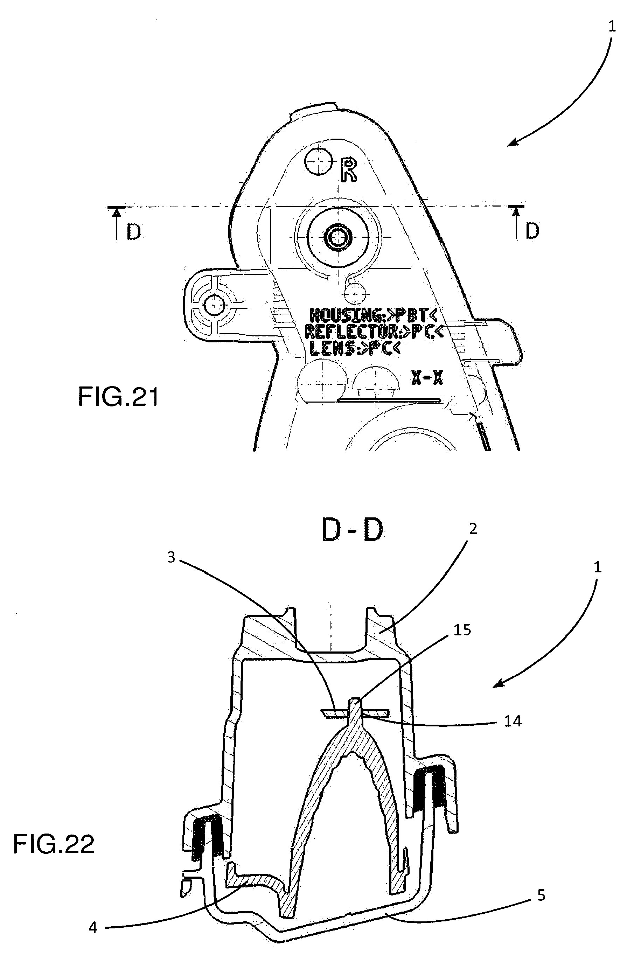

Un premier mode de réalisation d'un dispositif 1 d'éclairage et/ou de signalisation pour véhicule automobile est décrit ci-après en référence aux figures 1 à 12 et 15 à 22. Le dispositif d'éclairage et/ou de signalisation est par exemple un dispositif de signalisation diurne à diodes électroluminescentes.

Le dispositif comprend principalement une enceinte formée par un boîtier 2 et une glace 5 et recevant un support 3 supportant au moins une source lumineuse 6 et un réflecteur 4.

Le boîtier est de préférence réalisé en matériau plastique par moulage. De même, la glace est de préférence réalisée en matériau plastique transparent ou translucide par moulage.

Le boîtier comprend un premier moyen 31 d'appui sur le support, notamment sur une face 33 du support 3. Le premier moyen 31 peut comprendre des portions de fond du boîtier ou des saillies s'étendant depuis le fond du boîtier. Ce premier moyen est donc destiné à venir en contact contre une face du support, notamment contre la face inférieure 33 du support. Le boîtier comprend aussi un premier moyen de positionnement 13 du support par rapport au boîtier. Le premier moyen de positionnement comprend par exemple des pions 13, notamment des pions s'étendant depuis le fond du boîtier.

La glace comprend un deuxième moyen 22 d'appui sur le réflecteur, notamment sur une face supérieure 34 du réflecteur 4. Le deuxième moyen 22 peut comprendre des saillies s'étendant depuis le fond de la glace. Ce deuxième moyen est donc destiné à venir en contact contre une face du réflecteur, notamment contre la face supérieure 34 du réflecteur.

Le support peut consister en une plaque, notamment une plaque de circuit électrique imprimé, sur laquelle est fixée au moins une source lumineuse 6. L'au moins une source lumineuse peut comprendre une ou plusieurs diodes électroluminescentes soudées sur la plaque. Le support comprend aussi un deuxième moyen de positionnement 12 du support par rapport au boîtier. Le deuxième moyen de positionnement comprend par exemple des trous 12. Ce deuxième moyen de positionnement est destiné à coopérer avec le premier moyen de positionnement. Dans le mode de réalisation représenté, la coopération des premier et deuxième moyens de positionnement est réalisée par pénétration des pions 13 dans des trous 12. L'ajustement des premier et deuxième moyens de positionnement n'est pas forcément précis. Selon les applications, ce positionnement peut être approximatif afin de faciliter le montage et le jeu entre le boîtier et le support peut atteindre quelques dixièmes de millimètre, par exemple entre 2 et 9 millimètres, par exemple 0.5 mm.

Le support comprend aussi un troisième moyen de positionnement 14 du support par rapport au réflecteur. Le troisième moyen de positionnement comprend par exemple des trous 14, notamment des trous, comme des rainures, débouchant à la périphérie du support. Ce troisième moyen de positionnement est destiné à coopérer avec un quatrième moyen de positionnement prévu sur le réflecteur.

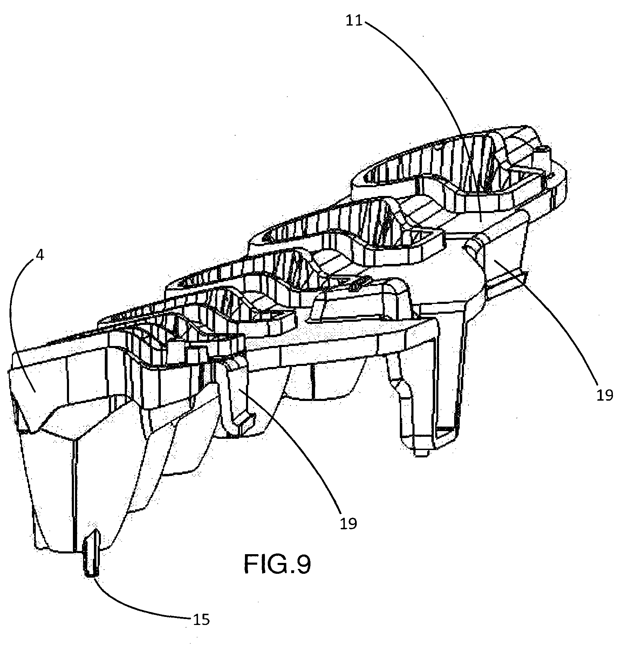

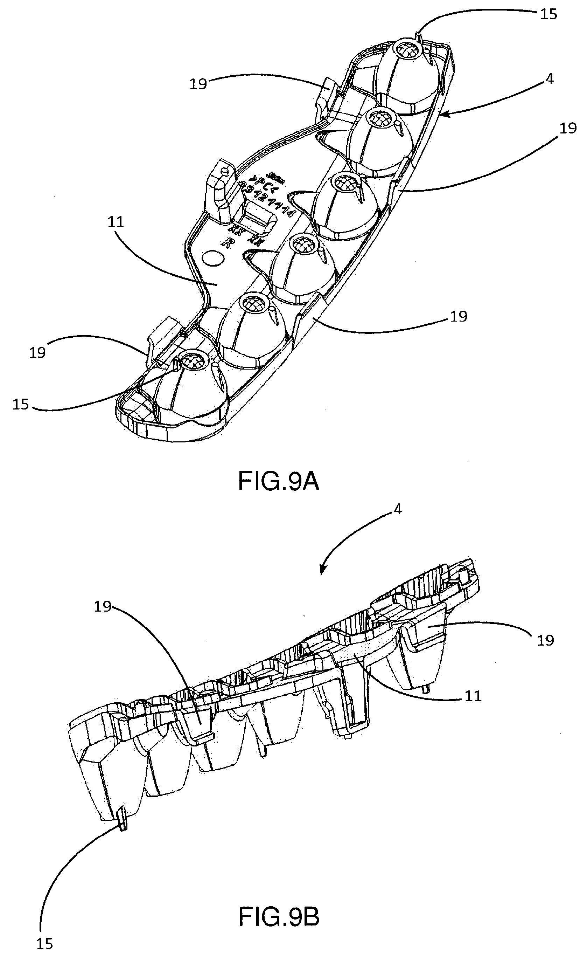

Le réflecteur est de préférence réalisé en matériau plastique par moulage. Il comprend de préférence une structure opaque en forme de plaque 11 dans laquelle sont pratiquées des formes en creux 16 recouvertes d'un revêtement réfléchissant et au fond desquelles sont pratiqués des trous 17 à l'intérieur desquels les sources lumineuses sont destinées à passer. Les formes en creux précédemment mentionnées constituent à proprement parler le réflecteur. Le réflecteur comprend aussi, comme visible sur les figures 9, 9A et 9B, un quatrième moyen de positionnement 15 du support par rapport au réflecteur. Le quatrième moyen de positionnement comprend par exemple des nervures 15 destinées à venir dans les trous 14. Ce quatrième moyen de positionnement est destiné à coopérer avec le troisième moyen de positionnement prévu sur le support. Dans le mode de réalisation représenté, la coopération des troisième et quatrième moyens de positionnement est réalisée par pénétration des nervures 15 dans les trous 14. L'ajustement des troisième et quatrième moyens de positionnement doit être relativement précis. En effet, il est important que les sources lumineuses soient correctement positionnées relativement aux formes en creux, pour que les rayons lumineux émis par les sources lumineuses soient correctement dirigés après réflexion sur les formes en creux. Le jeu entre le réflecteur et le support peut atteindre quelques centièmes de millimètres, par exemple 0.1 mm.

Les premier et deuxième moyens d'appui permettent d'immobiliser l'ensemble support-réflecteur 3, 4 selon une direction X définie par exemple comme la normale à la plaque 3 lorsque le support a une forme de plaque. Selon le dimensionnement du boîtier, de la glace, du support, et du réflecteur, les premier et deuxième moyens d'appui peuvent aussi permettre d'appliquer une action mécanique, par exemple de flexion, contraignant l'ensemble support-réflecteur. Dans ce cas, l'ensemble support-réflecteur peut également être immobilisé selon les directions Y et Z perpendiculaires entre elles et perpendiculaires à la direction X du fait des efforts appliqués aux interfaces boîtier-support et glace-réflecteur et des coefficients de frottement entre les pièces à ces interfaces.

Dans ce premier mode de réalisation de dispositif, la glace est fixée au boîtier par clippage et collage. Alternativement, la glace peut être fixée au boîtier par collage et/ou par clippage et/ou par soudage.

Le boîtier présente plusieurs oreilles 23 munies de rainures de clippage 25 et la glace présente plusieurs extensions 24, les extensions étant destinées à venir se loger dans les rainures de clippage 25 pour assurer la fixation de la glace sur le boîtier par clippage.

Le boîtier comprend également, en haut de ses bords, un canal 18 destiné à recevoir un produit adhésif 99 et une arête périphérique 51 de la glace. Préalablement à la mise en place de l'arête périphérique dans le canal, un bourrelet du produit adhésif est disposé au fond du canal. Ainsi, l'assemblage de la glace sur le boîtier peut être étanche.

De préférence, le canal présente des ouvertures 52 vers l'intérieur du boîtier. Ces ouvertures sont fermées par des extensions 19 prévues sur le réflecteur, lors de la mise en place de ce réflecteur dans le boîtier. Ainsi, le canal est réalisé au moins localement par des formes du réflecteur et le réflecteur peut donc être également maintenu en position dans le boîtier par collage. Alternativement ou complémentairement, des ouvertures peuvent être fermées par des extensions prévues sur le support, lors de la mise en place de ce support dans le boîtier. Ainsi, le canal peut être réalisé au moins localement par des formes du support et le support peut donc être également maintenu en position dans le boîtier par collage.

Un mode d'exécution du procédé d'assemblage d'un dispositif selon l'invention est décrit ci-après en référence aux figures 1 à 11. Ce mode d'exécution est appliqué à la réalisation d'un dispositif conforme au premier mode de réalisation décrit précédemment.

Dans une première étape représentée à la figure 1, on fournit le boîtier 2 et un faisceau électrique 54 comprenant un premier connecteur 7, un deuxième connecteur 9 et des conducteurs électriques 8 reliant les deux connecteurs.

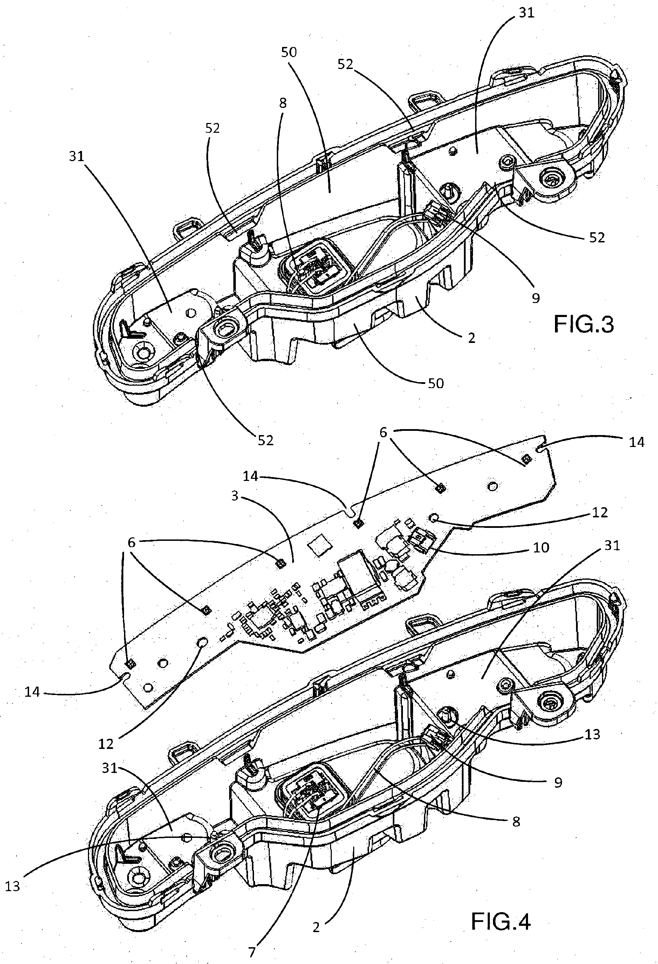

Dans une deuxième étape représentée aux figures 2 et 3, on clippe le premier connecteur dans une ouverture 6 pratiquée dans le fond du boîtier.

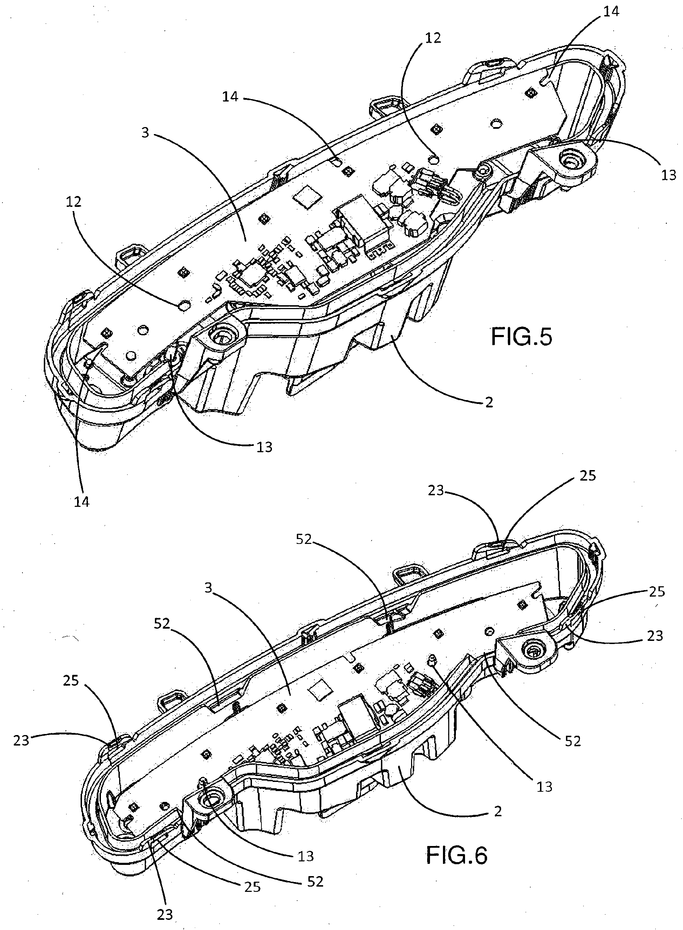

Dans une troisième étape représentée aux figures 4 et 5, on fournit le support et on clippe le deuxième connecteur sur un troisième connecteur 10 prévu sur le support.

Dans une quatrième étape représentée à la figure 6, on met en place ou on positionne le support dans le boîtier. Cette mise en place ou ce positionnement est réalisé par la coopération des premier et deuxième moyens de positionnement décrits plus haut. Le premier moyen d'appui agit alors sur le support. Il faut remarquer qu'il n'y a pas, à ce stade, de fixation du support dans le boîtier. Ainsi, le support tient uniquement par gravité dans le boîtier. Si on retourne le boîtier, le support s'échappe du boîtier. Contrairement au procédé selon l'invention, dans l'état de la technique, à ce stade, il y a fixation du support dans le boîtier, notamment par vissage.

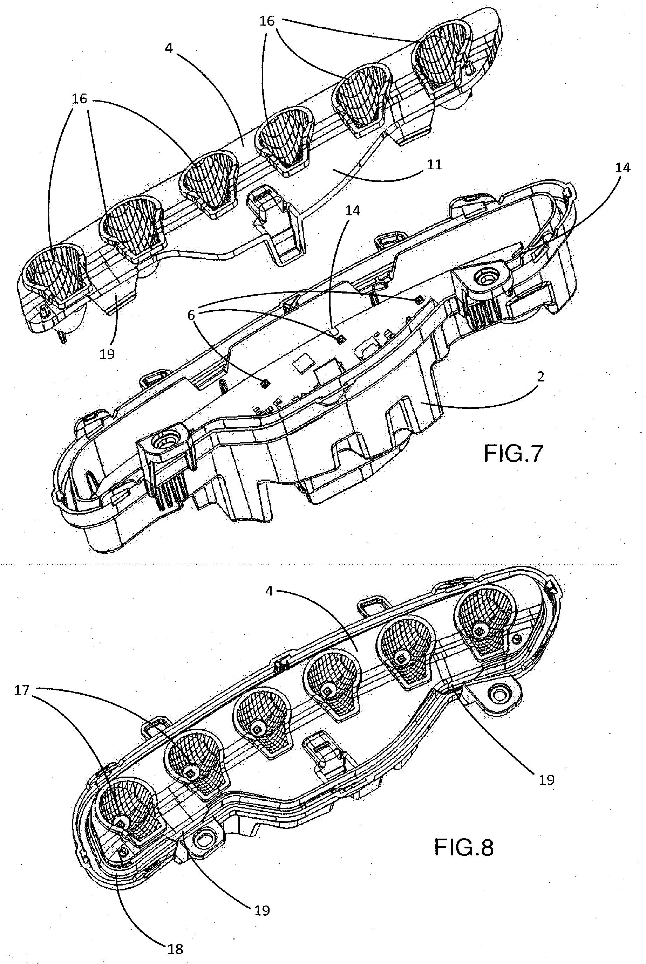

Dans une cinquième étape représentée à la figure 7, on fournit le réflecteur.

Dans une sixième étape représentée à la figure 8, on met en place ou on positionne le réflecteur sur le support. Cette mise en place ou ce positionnement est réalisé par la coopération des deuxième et troisième moyens de positionnement décrits plus haut. Il faut remarquer qu'il n'y a pas, à ce stade, de fixation du réflecteur sur le support ou sur le boîtier. Ainsi, le réflecteur tient uniquement par gravité sur le support. Si on retourne le boîtier, le réflecteur s'échappe de sur le support, de même que le support s'échappe du boîtier. Contrairement au procédé selon l'invention, dans l'état de la technique, à ce stade, il y a fixation du réflecteur sur le support ou dans le boîtier, notamment par vissage.

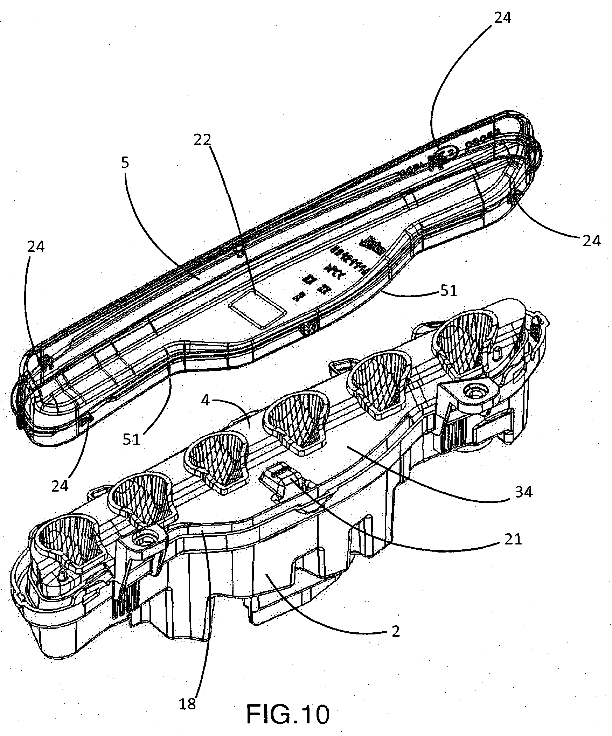

Dans une septième étape représentée à la figure 10, on fournit la glace.

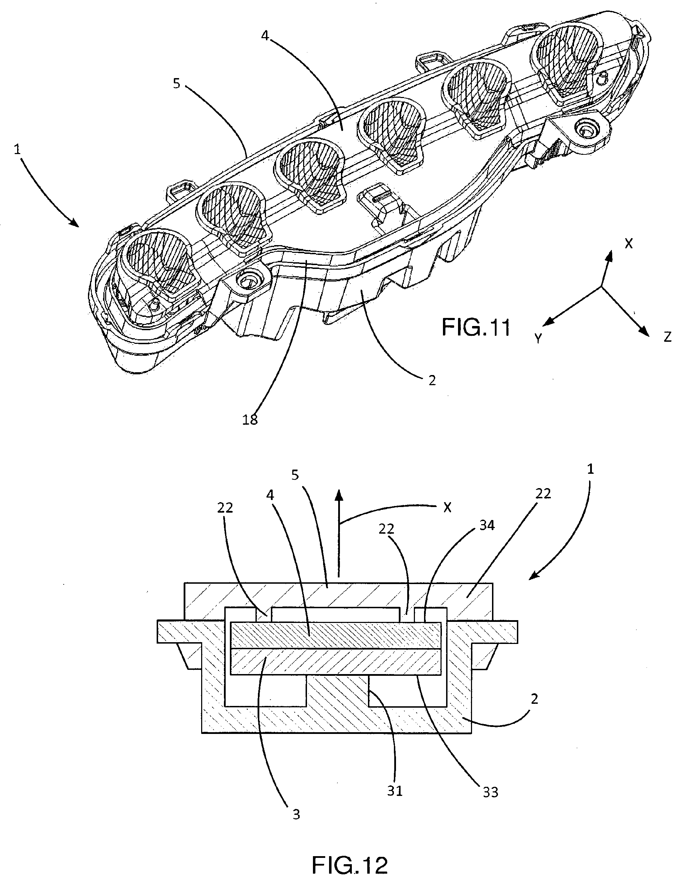

Dans une huitième étape représentée à la figure 11, on fixe la glace sur le boîtier. Éventuellement, avant cette huitième étape, on met en place un bourrelet de colle dans le canal 18 réalisé dans le boîtier. Lors de cette étape de fixation de la glace sur le boîtier, les moyens de clippage 24 et 23 entrent en coopération. Lors de cette étape de fixation de la glace sur le boîtier, le deuxième moyen d'appui 22 de la glace vient appuyer sur le réflecteur au niveau de zones 21 sur sa face supérieure 34. L'action de ce deuxième moyen d'appui et l'action du premier moyen d'appui permettent alors d'immobiliser le support et le réflecteur selon l'axe X.

Ainsi, le support et/ou le réflecteur se trouvent assemblés par empilage, ou « pris en sandwich » entre le boîtier et la glace.

Comme vue précédemment, l'immobilisation du support et du réflecteur selon des axes perpendiculaires à l'axe X peut être réalisée grâce :
- aux frottements existants aux interfaces boîtier-support et réflecteurs-glace et/ou
- grâce à un collage liant le boîtier et le support et/ou le boîtier et le réflecteur et/ou la glace et le support et/ou la glace et le réflecteur, ce collage étant réalisé lors du collage de la glace sur le boîtier.

Bien évidemment, on peut, alternativement au mode d'exécution décrit ci-dessus, commencer par fournir la glace, puis positionner dans la glace le réflecteur, puis positionner le support sur le réflecteur et enfin assembler la glace et le boîtier.

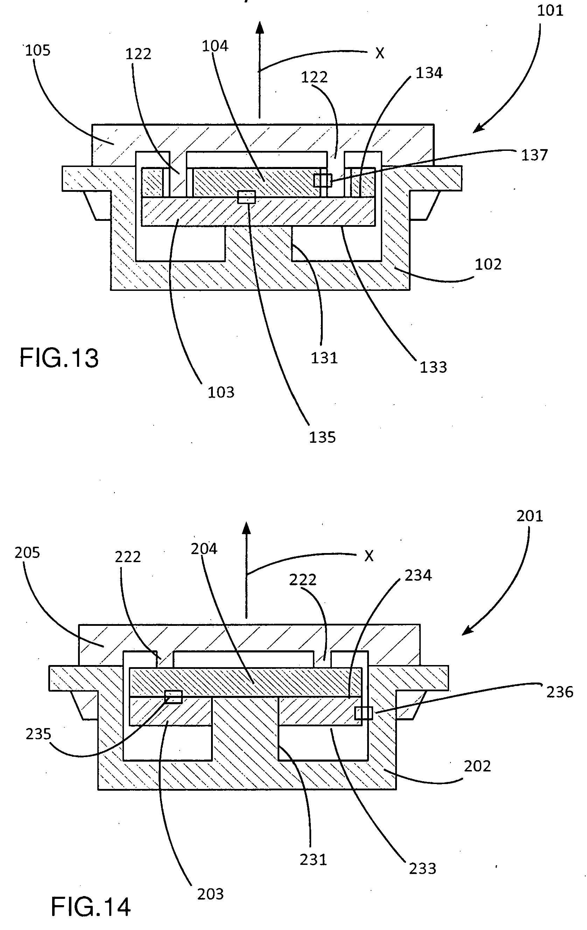

Un deuxième mode de réalisation 101 d'un dispositif d'éclairage et/ou de signalisation est décrit ci-après en référence à la figure 13.

Le dispositif 101 comprend principalement une enceinte formée par un boîtier 102 et une glace 105 et recevant un support 103 supportant au moins une source lumineuse et un réflecteur 104. Le boîtier comprend un premier moyen d'appui 131 destiné à venir appuyer contre le support 103, notamment au niveau d'une face inférieure 133 du support.

Le dispositif 101 diffère du premier mode de réalisation en ce que le glace comprend un deuxième moyen d'appui 122 destiné à venir, lui aussi, appuyer contre le support 103, notamment au niveau d'une face supérieure 134 de celui-ci. Une découpe est prévue dans le réflecteur 104 pour laisser passer le deuxième moyen d'appui. Dans ce mode de réalisation, le réflecteur 104 est fixé :
- au support 103 par un premier moyen de liaison 135, ou
- à la glace 105 par un deuxième moyen de liaison 137,
avant assemblage de la glace sur le boîtier.

Un troisième mode de réalisation 201 d'un dispositif d'éclairage et/ou de signalisation est décrit ci-après en référence à la figure 14.

Le dispositif 201 comprend principalement une enceinte formée par un boîtier 202 et une glace 205 et recevant un support 203 supportant au moins une source lumineuse et un réflecteur 204. La glace comprend un deuxième moyen d'appui 222 destiné à venir appuyer contre le réflecteur 204, notamment au niveau d'une face supérieure 234 du réflecteur.

Le dispositif 201 diffère du premier mode de réalisation en ce que le boîtier comprend un premier moyen d'appui 231 destiné à venir, lui aussi, appuyer contre le réflecteur 204, notamment au niveau d'une face inférieure 233 de celui-ci. Une découpe est prévue dans le support 203 pour laisser passer le premier moyen d'appui. Dans ce mode de réalisation, le support 203 est fixé :
- au réflecteur 204 par un premier moyen de liaison 235, ou
- au boîtier 202 par un deuxième moyen de liaison 236,
avant assemblage de la glace sur le boîtier.

Dans tous les modes de réalisation, les premier et deuxième moyens d'appui exercent des appuis dans des directions au moins sensiblement opposées. Par « au moins sensiblement opposées », on entend « opposé(es) » ou « sensiblement opposées ».

Par « élément immobilisé selon une direction », on entend que l'élément ne peut pas bouger selon cette direction ou que son mouvement selon cette direction est limité à une amplitude inférieure à 0.1 mm.

## Revendications

1. Dispositif d'éclairage et/ou de signalisation (1 ; 1' ; 1") d'un véhicule automobile, comprenant une enceinte formée par un boîtier (2 ; 2' ; 2") et une glace (5 ; 5' ; 5") et recevant un support (3 ; 3' ; 3") supportant au moins une source lumineuse (6) et un réflecteur (4 ; 4' ; 4"), **caractérisé en ce que** le boîtier et la glace présentent respectivement un premier moyen (31 ; 31' ; 31") d'appui sur le support (3') ou sur le réflecteur (4") ou sur l'ensemble support-réflecteur (3, 4) et un deuxième moyen d'appui (22 ; 22' ; 22") sur le support (3') ou sur le réflecteur (4") ou sur l'ensemble support-réflecteur (3, 4), les moyens d'appui permettant d'immobiliser l'ensemble support-réflecteur selon au moins une direction (X), voire d'appliquer une action mécanique, par exemple de flexion, contraignant l'ensemble support-réflecteur.

2. Dispositif selon la revendication 1, **caractérisé en ce que** le support et/ou le réflecteur (4) comprend au moins une extension (19) venant en contact avec un produit adhésif liant la glace et le boîtier.

3. Dispositif selon la revendication 2, **caractérisé en ce que** le boîtier comprend un canal (18) destiné à recevoir le produit adhésif et dont au moins certaines portions des bords sont formées par l'au moins une extension (19).

4. Dispositif selon l'une des revendications précédentes, **caractérisé en ce que** le boîtier (2) comprend un premier moyen de positionnement (13) coopérant avec un deuxième moyen de positionnement (12) prévu sur le support (3) ou sur le réflecteur.

5. Dispositif selon l'une des revendications 1 à 3, **caractérisé en ce que** la glace comprend un troisième moyen de positionnement coopérant avec un quatrième moyen de positionnement prévu sur le support ou sur le réflecteur.

6. Dispositif selon l'une des revendications précédentes, **caractérisé en ce que** le support (3) comprend un cinquième moyen de positionnement (14) coopérant avec un sixième moyen de positionnement (15) prévu sur le réflecteur (4).

7. Dispositif selon l'une des revendications précédentes, **caractérisé en ce que** la glace est collée et/ou clippée et/ou soudée sur le boîtier.

8. Véhicule automobile, **caractérisé en ce qu'**il comprend un dispositif d'éclairage et/ou de signalisation selon l'une des revendications précédentes.

9. Procédé d'assemblage d'un dispositif d'éclairage et/ou de signalisation (1 ; 1' ; 1") d'un véhicule automobile selon l'une des revendications 1 à 8, **caractérisé en ce qu'**il comprend les étapes suivantes :
- mettre en place,
- soit sur le boîtier (2) :
• le support (3), ou
• le support et le réflecteur (4),
en solidarisant ni le support, ni le réflecteur, au boîtier,
- soit sur la glace (5) :
• le réflecteur (4) ou
• le support (3) et le réflecteur,
en solidarisant ni le support, ni le réflecteur à la glace,
- assembler la glace au boîtier, par exemple par collage et/ou par clippage et/ou soudage.

10. Procédé d'assemblage selon la revendication 9, **caractérisé en ce que** l'étape d'assemblage de la glace au boîtier provoque une déformation, par exemple en flexion, du support (3) et/ou du réflecteur.

## Patentansprüche

1. Beleuchtungs- und/oder Signalgebungsvorrichtung (1; 1'; 1") eines Kraftfahrzeugs, mit einem von einem Gehäuse (2; 2'; 2") und einer Scheibe (5, 5'; 5") gebildeten Raum, der einen wenigstens eine Lichtquelle (6) tragenden Träger (3; 3'; 3") und einen Reflektor (4, 4'; 4") aufnimmt,
**dadurch gekennzeichnet, dass** das Gehäuse und die Scheibe jeweils ein erstes Mittel (31; 31'; 31") zur Anlage an dem Träger (3') oder an dem Reflektor (4") oder an der Einheit aus Träger und Reflektor (3, 4) und ein zweites Mittel (22; 22', 22") zur Anlage an dem Träger (3') oder an dem Reflektor (4") oder an der Einheit aus Träger und Reflektor (3, 4) umfassen, wobei die Anlagemittel die Träger-Reflektor-Einheit in wenigstens einer Richtung (X) zu immobilisieren vermögen bzw. eine mechanische Kraft beispielsweise durch Biegen auszuüben vermögen, wodurch die Träger-Reflektor-Einheit festgeklemmt wird.

2. Vorrichtung nach Anspruch 1,
**dadurch gekennzeichnet, dass** der Träger und/oder der Reflektor (4) wenigstens einen Fortsatz (19) aufweist, der mit einem die Scheibe und das Gehäuse miteinander verbindenden Klebemittel in Kontakt gelangt

3. Vorrichtung nach Anspruch 2,
**dadurch gekennzeichnet, dass** das Gehäuse einen Kanal (18) aufweist, der zur Aufnahme des Klebemittels bestimmt ist und bei dem wenigstens einige Abschnitte der Ränder durch den wenigstens einen Fortsatz gebildet sind.

4. Vorrichtung nach einem der vorhergehenden Ansprüche,
**dadurch gekennzeichnet, dass** das Gehäuse (2) ein erstes Positionierungsmittel (13) aufweist, das mit einem zweiten, am Träger (3) oder am Reflektor vorgesehenen Positionierungsmittel (12) zusammenwirkt.

5. Vorrichtung nach einem der Ansprüche 1 bis 3,
**dadurch gekennzeichnet, dass** die Scheibe ein drittes Positionierungsmittel aufweist, das mit einem vierten, am Träger oder am Reflektor vorgesehenen Positionierungsmittel zusammenwirkt.

6. Vorrichtung nach einem der vorhergehenden Ansprüche,
**dadurch gekennzeichnet, dass** der Träger (3) ein fünftes Positionierungsmittel (14) aufweist, das mit einem sechsten, am Reflektor (4) vorgesehenen Positionierungsmittel (15) zusammenwirkt.

7. Vorrichtung nach einem der vorhergehenden Ansprüche,
**dadurch gekennzeichnet, dass** die Scheibe an das Gehäuse geklebt und/oder geklipst und/oder geschweißt ist.

8. Kraftfahrzeug,
**dadurch gekennzeichnet, dass** es eine Beleuchtungs- und/oder Signalgebungsvorrichtung nach einem der vorhergehenden Ansprüche umfasst.

9. Verfahren zur Montage einer Beleuchtungs- und/oder Signalgebungsvorrichtung (1; 1'; 1") eines Kraftfahrzeugs nach einem der Ansprüche 1 bis 8,
**dadurch gekennzeichnet, dass** es die folgenden Schritt umfasst:
- Anbringen
• des Trägers (3) oder
• des Trägers und des Reflektors (4),
- entweder am Gehäuse (2),
wobei weder der Träger noch der Reflektor fest mit dem Gehäuse verbunden sind,
- oder Anbringen
• des Reflektors (4) oder
• des Trägers (3) und des Reflektors,
- an der Scheibe (5),
wobei weder der Träger noch der Reflektor fest mit der Scheibe verbunden sind,
- Montieren der Scheibe am Gehäuse, zum Beispiel durch Kleben und/oder Festklipsen und/oder Verschweißen.

10. Montageverfahren nach Anspruch 9,
**dadurch gekennzeichnet, dass** der Schritt zur Montage der Scheibe am Gehäuse eine Verformung, zum Beispiel durch Biegen, des Trägers (3) und/oder des Reflektors bewirkt.

## Claims

1. Lighting and/or signalling device (1; 1'; 1") for a motor vehicle, comprising an enclosure formed by a housing (2; 2'; 2") and a lens (5; 5'; 5") and receiving a support (3; 3'; 3") supporting at least one light source (6) and a reflector (4; 4'; 4"), **characterised in that** the housing and the lens have respectively a first means (31; 31'; 31") bearing on the support (3') or on the reflector (4") or on the support/reflector assembly (3, 4), and a second means (22; 22'; 22") bearing on the support (3') or on the reflector (4") or on the support/reflector assembly (3, 4), the bearing means immobilising the support/reflector assembly in at least one direction (X), or even applying a mechanical action, for example bending, stressing the support/reflector assembly.

2. Device according to claim 1, **characterised in that** the support and/or the reflector (4) comprises at least one extension (19) coming into contact with an adhesive product connecting the lens and the housing.

3. Device according to claim 2, **characterised in that** the housing comprises a channel (18) intended to receive the adhesive product, and at least some portions of the edges of which are formed by the at least one extension (19).

4. Device according to one of the preceding claims, **characterised in that** the housing (2) comprises a first positioning means (13) cooperating with a second positioning means (12) provided on the support (3) or on the reflector.

5. Device according to one of claims 1 to 3, **characterised in that** the lens comprises a third positioning means cooperating with a fourth positioning means provided on the support or on the reflector.

6. Device according to one of the preceding claims, **characterised in that** the support (3) comprises a fifth positioning means (14) cooperating with a sixth positioning means (15) provided on the reflector (4).

7. Device according to one of the preceding claims, **characterised in that** the lens is adhesively bonded and/or clipped and/or welded on the housing.

8. Motor vehicle, **characterised in that** it comprises a lighting and/or signalling device according to one of the preceding claims.

9. Method for assembling a lighting and/or signalling device (1; 1'; 1") of a motor vehicle according to one of claims 1 to 8, **characterised in that** it comprises the following steps:
- fitting
- either on the housing (2):
• the support (3), or
• the support and the reflector (4),
securing neither the support nor the reflector to the housing,
- or on the lens (5):
• the reflector (4), or
• the support (3) and the reflector,
securing neither the support nor the reflector to the lens,
- connecting the lens to the housing, for example by adhesive bonding and/or by clipping and/or welding.

10. Assembly method according to claim 9, **characterised in that** the step of assembling the lens on the housing causes a deformation, for example by bending, of the support (3) and/or of the reflector.
